# EUROPEAN PATENT APPLICATION

(11) **EP 4 512 262 A1**
(43) Date of publication of application: **26.02.2025**
(21) Application number: 23791985.7
(22) Date of filing: 31.01.2023
(51) Int. Cl.: A24F 40/44, A24F 40/46, C04B 38/00, C04B 35/00, A24B 15/167, A24F 40/10, A24F 40/465, C04B 35/20, C04B 35/634

(54) **POROUS MOISTURE ABSORBENT AND ATOMIZER USING SAME**

(30) Priority: 22.04.2022 KR 20220049898; 28.04.2022 KR 20220052511; 15.11.2022 KR 20220153117; 15.11.2022 KR 20220153116
(71) Applicant: Em-tech. Co., Ltd., Changwon-si, Gyeongsangnam-do 51539 (KR)
(72) Inventor: JEONG, Seung-kiu, Gimhae-si Gyeongsangnam-do 50946 (KR); KWON, Su-il, Anyang-si Gyeonggi-do 14102 (KR); KWON, Joong-hak, Anyang-si Gyeonggi-do 14038 (KR); LIM, Dong-wook, Anyang-si Gyeonggi-do 14063 (KR)
(74) Representative: Müller Hoffmann & Partner
(86) International application number: PCT/KR2023/001413
(87) International publication number: WO 2023/204401

(57) **Abstract**

The embodiment relates to a porous absorbent material, and more particularly, to a porous absorbent material including porous grains to facilitate absorption and transfer of a liquid phase.

The embodiment provides a porous absorbent material including a plurality of porous grains having micropores formed therein or on a surface thereof using a Benard cell phenomenon, and macropores are formed between the plurality of porous grains.

## Description

### TECHNICAL FIELD

The present disclosure relates to a porous absorbent material and an atomizer using the same, and more particularly, to a porous absorbent material formed of porous grains to facilitate absorption and transfer of a liquid phase, and an atomizer using a porous absorbent material in which heating wires between electrical terminals are covered with such a porous absorbent material.

### BACKGROUND ART

In general, electronic cigarettes refer to an electronic device manufactured to change a solution including nicotine filling an exchangeable cartridge into an aerosol or gaseous state (atomization state) to be inhaled.

Such electronic cigarettes may not include harmful ingredients, such as tar, while satisfying the desire to smoke in place of regular cigarettes, having advantages of reducing harmful effects caused by cigarettes on the human body and, at the same time, not causing indirect harm from smoking, so that the number of users of electronic cigarettes tends to increase explosively. That is, the electronic cigarette may be smoked indoors and has the same effect as smoking a cigarette, while preventing damage caused by cigarettes that cause various diseases.

In particular, recently, electronic cigarettes that may enjoy various flavors by adding other flavors, such as fruits, to the taste of tobacco have also been released.

In such an electronic cigarette, when an atomizer including liquid nicotine is coupled to a battery unit, a heating element of the atomizer heats up and vaporizes the liquid nicotine.

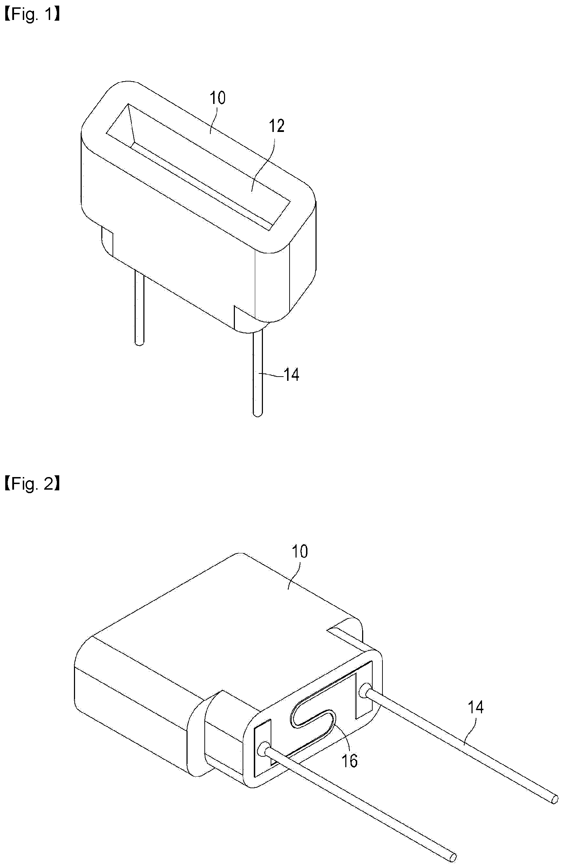

FIG. 1 is a top perspective view of an atomizer using a porous absorbent material according to the related art, and FIG. 2 is a bottom perspective view of the atomizer using a porous absorbent material according to the related art.

When an aerosol generator employs a wick and a coil assembly as a vaporizing unit, there is a possibility of local carbonization of the liquid phase and the wick due to a difference in heat transfer rate between the wick and the coil. The atomizer using a porous absorbent material shown in FIGS. 1 and 2 was developed to solve this problem and includes a porous ceramic 10 that absorbs and supports a liquid phase and a heating element 16 attached to a lower surface of the porous ceramic 10 to heat and vaporize the liquid phase. A power line 14 for applying current to the heating element 16 may be connected to the heating element 10 attached to the surface of the porous ceramic 10.

The porous ceramic 10 includes a recess 12 serving as a reservoir in which a liquid phase may be contained in the center thereof. By providing the reservoir in which the liquid phase may be contained, the liquid phase may be continuously supplied more stably into pores of the porous ceramic 10.

In addition, in the porous ceramic 10, movement of the liquid phase is slow and movement of the aerosol is smooth at high temperatures, and the pores of the porous ceramic 10 may be connected to form a passage through which the aerosol may pass. At this time, as a specific surface area of the atomizer using the porous absorbent material increases, absorption of the liquid phase may increase, thereby increasing the amount of atomization.

However, the atomizer 10 using a porous absorbent material according to the related art has a problem in that the liquid phase is in contact with the heated heating wire so that the liquid phase rapidly increases in temperature to splash out (liquid splash phenomenon)

### DISCLOSURE OF THE INVENTION

An aspect of the present disclosure provides an atomizer using a porous absorbent material, in which the porous absorbent material includes porous grains to make absorption and transfer of a liquid phase smooth and a heating wire between electric terminals is inserted into or covered by the porous absorbent material to prevent a liquid splash phenomenon of the related art atomizer using a porous absorbent material.

An embodiment provides a porous absorbent material including a plurality of porous grains having micropores on a surface or inside thereof using the Benard cell phenomenon, wherein macropores are formed between the plurality of porous grains.

Another aspect of an embodiment provides a porous absorbent material in which the plurality of porous grains may include a metal component and silicate.

Another aspect of an embodiment provides a porous absorbent material in which the metal component may be an alkaline earth group.

Another aspect of an embodiment provides a porous absorbent material in which the plurality of porous grains may include fiberglass.

Another aspect of an embodiment provides a porous absorbent material in which the fiberglass may include 50 wt% or more of SiO₂.

Another aspect of an embodiment provides a porous absorbent material in which the micropores may be in the range of 20 µm to 50 µm.

Another aspect of an embodiment provides a porous absorbent material in which the macropores may be in the range of 1 µm to 20 µm.

Another aspect of an embodiment provides a porous absorbent material in which the porous grains may include one or more selected from the group consisting of magnesium silicate, aluminum silicate, silicate silicate, zeolite, titanium oxide, titanium carbide, zirconia, silica, silicon carbide, silicon nitride, mullite, cordierite, tungsten carbide, zirconium carbide, and aluminum nitride.

Another aspect of an embodiment provides a porous absorbent material atomizer including: a porous absorbent material according to any one the embodiments described above; and a heating wire portion heating the porous absorbent material.

Another aspect of an embodiment provides a porous absorbent material atomizer in which the porous absorbent material may include a bead-shaped or spherical powder-shaped grain and formed by filling a certain space with a plurality of grains.

Another aspect of an embodiment provides a porous absorbent material atomizer in which some of the grains in the form of beads or spherical powder may form a cover layer covering the heating wire portion with a thickness in the range of 10 µm to 500 µm, and a thickness of the heating wire portion may be less than a thickness of the porous absorbent material cover layer.

Another aspect of an embodiment provides an atomizer using a porous absorbent material, including: a porous absorbent material block including three-dimensional porous grains; a heater unit including a heating wire portion mounted on or adjacent to a first surface of the porous absorbent material block; and a porous absorbent material cover layer having a porous characteristic, covering the heating wire portion, and mounted on the first surface of the porous absorbent material block.

Another aspect of an embodiment provides an atomizer using a porous absorbent material, in which the porous absorbent material block and the porous absorbent material cover layer may be formed of a hydrophilic material.

Another aspect of an embodiment provides an atomizer using a porous absorbent material, in which a thickness of the porous absorbent material cover layer may be in the range of 10 µm to 500 µm, and a thickness of the heating wire portion may be less than a thickness of the porous absorbent material cover layer.

Another aspect of an embodiment provides an atomizer using a porous absorbent material, in which a groove into which the heating wire portion is inserted may be formed on the first surface of the porous absorbent material block, and the porous absorbent material cover layer may cover the groove to embed the heating wire portion.

The porous absorbent material of an embodiment includes porous grains or spherical grains having an increased specific surface area, so that the amount of absorption of a liquid or gel-phase aerosol-forming base material may increase and the transfer amount of the liquid-phase aerosol-forming base material according to capillarity may increase, thereby eventually increasing the generated amount of aerosol.

In an embodiment, since the heating wire formed on one surface of the porous absorbent material is inserted (embedded) or covered by the porous absorbent material, the amount of atomization may increase according to an increase in the transfer amount of the liquid phase, a leakage prevention function may be provided, a burnt taste during a carbonization process of the liquid phase is not discharged to the outside.

In addition, since unit grains of the porous absorbent material according to an embodiment are formed as porous grains or porous spherical grains subjected to the Benard cell phenomenon, defects may be induced on the surface of the particles by the Benard cell phenomenon, resulting in an increase in the specific surface area of the porous grains, and accordingly, the absorption amount of the liquid phase may increase and the generated amount of aerosol may eventually increase.

### BRIEF DESCRIPTION OF THE DRAWINGS

FIG. 1 is a top perspective view of a vaporizing unit of an aerosol generator according to the related art;
FIG. 2 is a bottom perspective view of the vaporizing unit of the aerosol generator according to the related art;
FIG. 3 is a scanning microscope photograph of porous grains constituting a porous absorbent material for using the Benard cell phenomenon according to an embodiment;
FIG. 4 illustrates various three-dimensional shapes of porous absorbent materials according to an embodiment;
FIG. 5 is a conceptual perspective view of an atomizer using a porous absorbent material according to a first embodiment; and
FIG. 6 is a conceptual perspective view of an atomizer using a porous absorbent material according to a second embodiment.

### BEST MODE FOR CARRYING OUT THE INVENTION

Hereinafter, various embodiments of the present disclosure will be described with reference to the accompanying drawings. Accordingly, those of ordinary skill in the art will recognize that modification, equivalent, and/or alternative on the various embodiments described herein may be variously made without departing from the scope and spirit of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (for example, elements, such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the present disclosure, a first element may be referred to as a second element, and similarly, a second element may be referred to as a first element.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

In an embodiment, a liquid or liquid aerosol cartridge accommodates a liquid or gel-type aerosol-forming base material (including one or more of perfume, nicotine, vegetable glycerin (VG), propylene glycol (PG), medicine, clove, etc., for example) in an accommodation space therein.

The liquid cartridge includes an atomizer including a porous absorbent material so that the aerosol-forming base material may be transferred by capillarity in contact with the aerosol-forming base material.

In an embodiment, the porous absorbent material atomizer includes a porous absorbent material including a liquid intake surface in contact with the aerosol-forming base material and an atomization surface formed on a side surface not adjacent to the liquid intake surface or a discharge surface to which atomized aerosol is discharged. In an embodiment, a heating wire portion is mounted to be adjacent to the atomization surface or the discharge surface.

An aerosol generator according to an embodiment includes a case in which a liquid cartridge is mounted, a power supply unit (control device) supplying power to the liquid cartridge, and an air flow path connecting the atomization surface or discharge surface to an external space. Alternatively, the aerosol generator according to the embodiment may include a porous absorbent material atomizer in which the liquid intake surface contacts the accommodation space, and an air flow path connected to the external space and contacting the atomization surface or the discharge surface of the porous absorbent material atomizer.

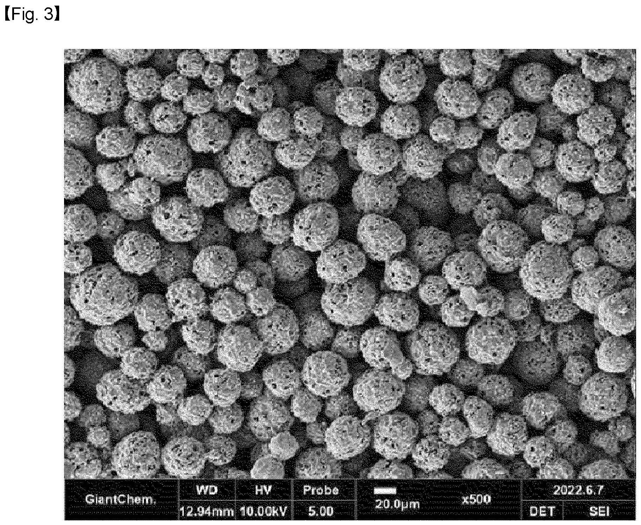

FIG. 3 is a scanning microscope photograph of porous grains constituting a porous absorbent material for using a Benard cell phenomenon according to an embodiment.

The unit grains of the porous absorbent material or a porous absorbent material block in the present embodiment may be porous grains or porous spherical grains formed using the Benard cell phenomenon, and defects are induced on the surface of the particles by the Benard cell phenomenon, resulting in an increase in the specific surface area, thereby increasing the amount of absorption of the liquid or gel-phase aerosol-forming base material and eventually increasing the generated amount of aerosol.

The above porous grains are porous three-dimensional (or spherical) grains having a number of grooves or pores formed on the surface due to induced surface defects (cracks) and having a remarkably increased specific surface area.

The porous grains may be in the form of beads or in the form of spherical powder particles. A diameter or size of the porous grains is in the range of 10 µm to 300 µm. Pores formed on the surface or inside of porous grains correspond to micropores and in the range of 20 µm to 50 µm.

The pores between these porous grains are pores of the porous absorbent material, correspond to macropores, and are in the range of 1 µm to 130 µm. As described below, when porous grains are blocked in a three-dimensional shape by a binder and used as a porous absorbent material, the pores between the porous grains in the block are macropores, and when grains in the form of beads or spherical powder are used as it is as a porous absorbent material, gaps between the grains loaded in an installation space of the porous absorbent material become macropores. Porosity of the porous absorbent material is in the range of 30 % to 70 %. The porosity is calculated as the sum of macropores and micropores.

Each of the porous grains includes a metal component and a silicate. The metal component is an alkaline earth group material, such as aluminum, magnesium, and calcium. In particular, the material of the porous grains includes one or more selected from the group consisting of magnesium silicate, aluminum silicate, silicate silicate, zeolite, titanium oxide, titanium carbide, zirconia, silica, silicon carbide, silicon nitride, mullite, cordierite, tungsten carbide, zirconium carbide, and aluminum nitride.

The porous grains preferably have hydrophilic properties for absorption of liquid or gel aerosol-forming base materials.

In addition, the porous grains may additionally include fiberglass. SiO₂ is included in the weight percentage of 50% or more in this fiberglass.

The porous absorbent material in the present embodiment has a function of absorbing liquid or gel-like aerosol and/or is mounted in an aerosol generator or a cartridge and has a function of transferring the liquid-phase aerosol-forming base material by capillarity. These absorption and transfer functions may be performed more smoothly in a porous absorbent material including porous grains as in the embodiment. Due to the absorption and transfer functions, when the porous absorbent material is applied to an aerosol generator or a cartridge, certain aerosol-forming base material may be transferred when a user puffs to generate a certain amount of smoke.

When the porous absorbent material is applied as an atomizer to an aerosol generator or cartridge, the porous grains may be blocked in a three-dimensional shape using a binder, and a heating wire portion for heating the porous absorbent material block may be installed on one surface of the porous absorbent material block. However, the porous absorbent material may be applied as an atomizer to an aerosol generator or cartridge in the form of a bead or spherical powder grain without undergoing a separate blocking process. A liquid or gel aerosol-forming base material may be absorbed into a porous absorbent material in the form of a bead or spherical powder grain and loaded in an aerosol generator or cartridge, and a heating wire may be disposed to be in contact with the porous absorbent material in the form of a bead or spherical powder grain. In this case, the shape of the heating wire may have various shapes, such as a blade shape, a cylindrical shape, and a pin shape. Since the beads or spherical powder grains do not have a specific shape, a shape or arrangement of the heating wire may be freely disposed and a contact area between the heating wire and the porous absorbent material may. be widened In addition, when the aerosol-forming base material is absorbed by the porous absorbent material in the form of beads or spherical powder grains, the same amount of aerosol-forming base material may be absorbed within a much shorter time than in the block form.

That is, when the grain itself is used as a porous absorbent material, the absorption and transfer functions of the liquid phase are superior, so that a manufacturing time of the atomizer using the porous absorbent material may be shortened during manufacture than when the porous grains are blocked, and when in use, the liquid phase may be smoothly transferred to increase the amount of atomization.

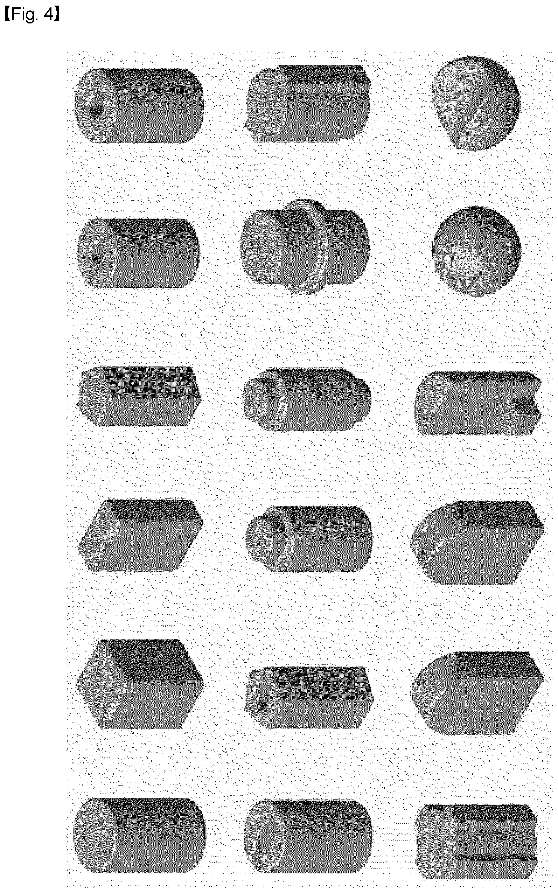

FIG. 4 illustrates various three-dimensional shapes of porous absorbent materials according to an embodiment.

As shown in FIG. 4, the porous absorbent material may be implemented in various shapes depending on the structure or shape of the aerosol generator or cartridge in use. In particular, in an embodiment, a hollow in a vertical direction may be formed. The hollow in the vertical direction may be used as an air flow path for an aerosol formed as the aerosol-forming base material absorbed by the porous absorbent material is heated by the heating wire and atomized.

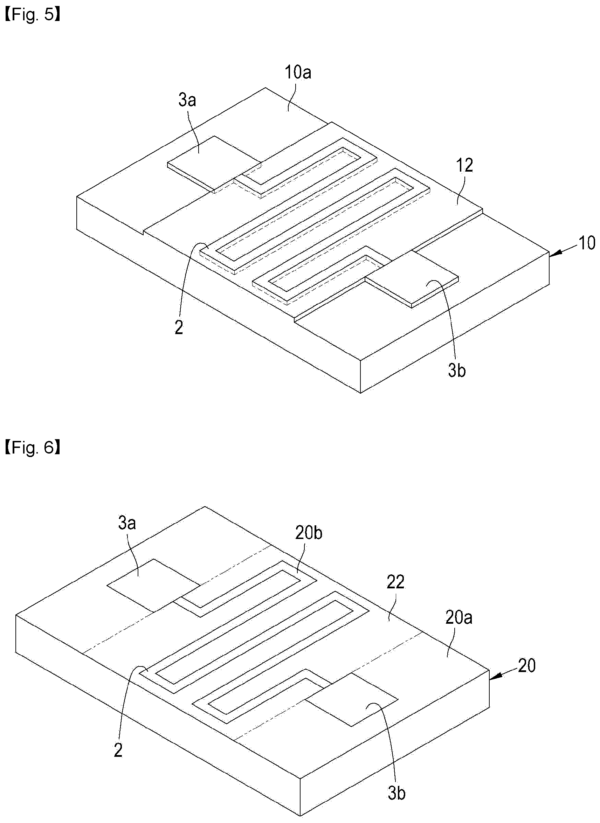

FIG. 5 is a conceptual perspective view of an atomizer using a porous absorbent material according to a first embodiment, and FIG. 6 is a conceptual perspective view of an atomizer using a porous absorbent material according to a second embodiment.

Referring to FIG. 5, an atomizer using a porous absorbent material includes a porous absorbent material block 10 having a three-dimensional shape and including the porous grains described above, a heating wire portion 2 mounted on an atomization surface 10a, which is one surface of the porous absorbent material block 10 or mounted in contact therewith, a heating unit including first and second electrical terminals 3a and 3b respectively connected to both end portions of the heating wire portion 2, and a porous absorbent material cover layer 12 mounted on the atomization surface 10a of the porous absorbent material 10 and covering an upper surface and an outer surface of the heating wire portion 2.

The porous absorbent material block 10 includes the atomization surface 10a and an absorption surface which face in opposite directions or are not adjacent to each other. When the atomizer is mounted on a liquid cartridge or an aerosol generator, the absorption surface, as a liquid absorption surface, is a portion that contacts a liquid or is supplied with the liquid, and the atomization surface 10a corresponds to an atomization surface or a discharge surface. The atomization surface 10a is inserted into or in contact with the air flow path.

In addition, the porous absorbent material block 10 transfers the liquid phase by capillarity, and the liquid phase is transferred from the absorption surface to the atomization surface 10b.

In addition, the aforementioned material of the porous absorbent material block 10 may be sintered in a mold to have a three-dimensional shape.

The heater unit includes the first and second electrical terminals 3a and 3b connected to both end portions of the heating wire portion 2 and connected to a control device (not shown) to receive and apply power to generate thermal energy to be transferred, diffused, or applied to the atomization surface 10a of the porous absorbent material block 10.

The heating wire portion 2 of the heater unit has a sine wave shape or a mesh shape, and is mounted or attached in a solid state of a metal material or a paste of a metal material to the atomization surface 10a. The metal material of the heating wire portion 2 may include any one of nickel-chromium, SUS, kanthal, tungsten, titanium, copper, and graphene.

The porous absorbent material cover layer 12 has hydrophilic properties and covers the heating wire portion 2 and a portion of the atomization surface 10a therearound, so that the first and second electrical terminals 3a and 3b are exposed to the outside. The porous absorbent material cover layer 12 is formed of the same material as that of the porous absorbent material block 10 and may be formed of porous grains.

A thickness of the porous absorbent material cover layer 12 is in the range of 10 µm to 500 µm, and a thickness of the heating wire portion 2 is less than the thickness of the porous absorbent material cover layer 12 so that the heating wire portion 2 may be mounted on the surface of the atomization surface 10a and buried by the porous absorbent material cover layer 12.

As the porous absorbent material cover layer 12 described above is mounted or attached to the atomization surface 10a, while covering the heating wire portion 2, the heating wire portion 2 may be in close contact with the porous absorbent material block 10 and may be prevented from directly contacting the air flow path, and thus, even if the liquid aerosol-forming base material is carbonized in the heating wire portion 2, a burnt taste is not discharged together with the aerosol discharged through the air flow path. In addition, the porous absorbent material cover layer 12 prevents the aerosol-forming base material from leaking through the atomization surface 10a of the porous absorbent material block 10.

Referring to FIG. 6, an atomizer using a porous absorbent material includes a porous absorbent material block 20 having a three-dimensional shape and including the porous grains described above, a heating wire portion 2 inserted and mounted in a groove 20b formed on an atomization screen 20a, which is one surface of the porous absorbent material block 20, a heater unit including first and second electrical terminals 3a and 3b respectively connected to both end portions of the heating wire portion 2 and inserted and mounted in the groove 20b, and a porous absorbent material cover layer 22 covering the groove 20b, exposing the first and second electrical terminals 3a and 3b to the outside, and covering the heating wire portion 2.

The groove 20b has the same shape as the heater unit, and has a depth by which the heating wire portion 2 may be completely inserted into the groove 20b. A depth of the groove 20b is in the range of 10 µm to 500 µm, and the heating wire portion 2 has a thickness less than the depth of the groove 20b. A thickness of the porous absorbent material cover layer 22 is equal to or less than the depth of the groove 20b.

The porous absorbent material cover layer 22 is formed to cover the groove 20b to completely cover an upper surface of the heating wire portion 2.

The action of the porous absorbent material cover layer 22 in FIG. 6 is the same as that of the porous absorbent material cover layer 12 of FIG. 5.

Meanwhile, unlike the embodiments shown in FIGS. 5 and 6, even when the porous absorbent material is not used as a block and the porous grain itself is used as the porous absorbent material, the liquid splash structure may be similarly applied.

Bead-shaped or spherical powder grains containing a liquid phase may be loaded in a predetermined space, the heating wire may be installed, and then the bead-shaped or spherical powder grains may be loaded in the range of 10 µm to 500 µm to bury the heating wire portion, so that some of the bead-shaped or spherical powder grains may serve as a cover layer.

Although a few aspects of the present disclosure have been shown and described, it would be appreciated by those skilled in the art that changes may be made in the aspects without departing from the principles and spirit of the invention, the scope of which is defined in the claims and their equivalents.

## Claims

1. A porous absorbent material comprising:
a plurality of porous grains having micropores on a surface or inside thereof using the Benard cell phenomenon,
wherein macropores are formed between the plurality of porous grains.

2. The porous absorbent material of claim 1, wherein the plurality of porous grains include a metal component and silicate.

3. The porous absorbent material of claim 2, wherein the metal component is an alkaline earth group.

4. The porous absorbent material of claim 2, wherein the plurality of porous grains include fiberglass.

5. The porous absorbent material of claim 4, wherein the fiberglass includes 50 wt% or more of SiO₂.

6. The porous absorbent material of claim 1, wherein the micropores is in the range of 20 µm to 50 µm.

7. The porous absorbent material of claim 1, wherein the macropores is in the range of 1 µm to 20 µm.

8. The porous absorbent material of claim 1, wherein the porous grains include one or more selected from the group consisting of magnesium silicate, aluminum silicate, silicate silicate, zeolite, titanium oxide, titanium carbide, zirconia, silica, silicon carbide, silicon nitride, mullite, cordierite, tungsten carbide, zirconium carbide, and aluminum nitride.

9. A porous absorbent material atomizer comprising:
a porous absorbent material according to any one of claims 1 to 8; and
a heating wire portion heating the porous absorbent material.

10. The porous absorbent material atomizer of claim 9, wherein the porous absorbent material includes a bead-shaped or spherical powder-shaped grain and formed by filling a certain space with a plurality of grains.

11. The porous absorbent material atomizer of claim 10, wherein
some of the grains in the form of beads or spherical powder form a cover layer covering the heating wire portion with a thickness in the range of 10 µm to 500 µm, and
a thickness of the heating wire portion is less than a thickness of the porous absorbent material cover layer.

12. An atomizer using a porous absorbent material, the atomizer comprising:
a porous absorbent material block including three-dimensional porous grains;
a heater unit including a heating wire portion mounted on or adjacent to a first surface of the porous absorbent material block; and
a porous absorbent material cover layer having a porous characteristic, covering the heating wire portion, and mounted on the first surface of the porous absorbent material block.

13. The atomizer of claim 12, wherein the porous absorbent material block and the porous absorbent material cover layer are formed of a hydrophilic material.

14. The atomizer of claim 12, wherein
a thickness of the porous absorbent material cover layer is in the range of 10 µm to 500 µm, and
a thickness of the heating wire portion is less than a thickness of the porous absorbent material cover layer.

15. The atomizer of claim 12, wherein a groove into which the heating wire portion is inserted is formed on the first surface of the porous absorbent material block, and the porous absorbent material cover layer covers the groove to embed the heating wire portion.
